# FASCICULE DE BREVET EUROPEEN

(11) **EP 2 245 576 B1**
(45) Date de publication et mention de la délivrance du brevet: **28.11.2012**
(21) Numéro de dépôt: 09720502.5
(22) Date de dépôt: 27.02.2009
(51) Int. Cl.: G06K 9/00

(54) **DISPOSITIF DE COMMANDE INTEGRANT UN CAPTEUR BIOMETRIQUE**
STEUEREINRICHTUNG MIT EINEM BIOMETRISCHEN SENSOR
CONTROL DEVICE INCLUDING A BIOMETRIC SENSOR

(30) Priorité: 28.02.2008 FR 0851291; 03.07.2008 FR 0803793
(43) Date de publication de la demande: 03.11.2010
(73) Titulaire: MORPHO, 75015 Paris (FR); Schneider Electric Industries SAS, 92500 Rueil-Malmaison (FR)
(72) Inventeur: BENNI, Dominique, F-16600 Mornac (FR); CHAUVET, Francis, F-16440 Mouthiers (FR); FRANC, Aurélien, F-16410 Garat (FR); GUILLOT, Alain, F-16370 Fleac (FR); GUY, Alexandre, F-75015 Paris (FR); MARC, Nicolas, F-75015 Paris (FR); TARDIVON, Alain, F-16170 Gourville (FR)
(74) Mandataire: Lavialle, Bruno François Stéphane
(86) Numéro de dépôt international: PCT/FR2009/000217
(87) Numéro de publication internationale: WO 2009/112724

(56) Documents cités:
- EP-A- 1 306 816
- EP-A- 1 536 380
- US-A1- 2006 181 521
- US-A1- 2007 146 117

## Description

La présente invention se rapporte à un dispositif de commande comportant un capteur biométrique d'empreintes digitales. Le dispositif de l'invention prend la forme d'un bouton destiné à être monté sur un panneau de commande.

### ARRIERE PLAN DE L'INVENTION

Il est connu par le document EP 1 306 816 un dispositif de commande intégrant un capteur biométrique. Le dispositif se compose plus précisément d'un élément d'actionnement intégrant le capteur biométrique et d'un dispositif électronique relié au capteur. Le dispositif électronique comporte notamment une unité de traitement servant à traiter les données générées par le capteur lors d'une identification et une unité de mémorisation pour mémoriser les données traitées. Un programme permet d'enregistrer les données des personnes acquises et une unité de comparaison et d'interprétation sert à comparer et à interpréter les données d'identification de personnes acquises grâce au capteur avec des données d'identification de personnes déjà mémorisées dans l'unité de mémorisation.

Ce dispositif de l'art antérieur comporte donc un capteur biométrique servant à acquérir des données d'identification mais il ne peut pas être entièrement configuré à partir de son élément d'actionnement.

En outre, il est connu par le document US 2007/0146117 un dispositif de commande comprenant un boîtier incluant:
- un organe de commande comportant une aire de capture intégrant un capteur biométrique d'empreintes digitales;
- une interface de visualisation qui comporte une diode de signalement qui est intégrée au capteur biométrique.

### OBJET DE L'INVENTION

Le but de l'invention est de proposer un dispositif de commande monolithique pouvant être configuré de manière autonome pour l'acquisition de nouvelles données et la gestion des données déjà mémorisées.

### RESUME DE L'INVENTION

Ce but est atteint par un dispositif de commande comprenant un boîtier incluant :
- un organe de commande intégrant un capteur biométrique d'empreintes digitales apte à générer des données d'identification d'une personne,
- une unité centrale connectée au capteur et renfermant des moyens de traitement et des moyens de mémorisation, lesdits moyens de mémorisation étant aptes à stocker des données d'identification de personnes et un programme de gestion destiné à comparer des données d'identification mémorisées avec des données d'identification d'une nouvelle personne à acquérir grâce à l'organe de commande et à enregistrer des données d'identification de nouvelles personnes acquises,
caractérisé en ce que :
- l'organe de commande comporte une interface de saisie et une interface de visualisation pour gérer les données d'identification mémorisées et l'acquisition de nouvelles données d'identification,
- l'interface de visualisation comporte au moins une diode électroluminescente de signalement, qui est intégrée au capteur biométrique et l'unité centrale est agencée pour synchroniser une phase de capture d'empreinte par le capteur biométrique avec une phase d'extinction de la diode électroluminescente de signalement,
- le capteur biométrique comporte un capteur qui est disposé avec ladite au moins une diode de signalement sous une fenêtre de capture.

Selon une particularité, l'interface de saisie est intégrée au capteur biométrique.

Ainsi, le dispositif peut comprendre un nombre de boutons limité voire nul, le capteur formant une interface de saisie pouvant être programmée pour commander une ou plusieurs fonctions.

Selon un mode de réalisation préféré, l'interface de saisie comprend au moins deux zones définies du capteur biométrique.

Avantageusement, l'unité centrale est agencée pour faire clignoter la diode électroluminescente de signalement et alterner des phases de capture d'empreinte et d'inactivation de la capture.

Selon une autre particularité, l'interface de visualisation comporte des diodes électroluminescentes associées chacune à un mode de configuration du dispositif.

Selon une autre particularité, l'interface de visualisation comporte une diode électroluminescente associée à une erreur dans la configuration du dispositif.

Selon une autre particularité, l'interface de visualisation comporte une diode électroluminescente associée à un mode de configuration ajout/suppression d'un administrateur.

Selon une autre particularité, l'interface de visualisation comporte une diode électroluminescente associée à un mode de configuration ajout/suppression d'un utilisateur.

Selon une autre particularité, l'interface de visualisation comporte une diode électroluminescente associée à un mode de configuration de réinitialisation du dispositif.

Selon une autre particularité, l'organe de commande est visible sur une face avant d'un panneau et en ce qu'il se prolonge par un élément tubulaire traversant le panneau à travers une ouverture circulaire.

Selon une autre particularité, l'interface de visualisation comporte une diode électroluminescente associée à l'état de sortie du dispositif.

### BREVE DESCRIPTION DES DESSINS

D'autres caractéristiques et avantages vont apparaître dans la description détaillée qui suit d'un mode de réalisation donné à titre d'exemple. Il sera fait référence aux dessins annexés, parmi lesquels :
- la figure 1 représente le dispositif de l'invention en vue de côté,
- la figure 2 représente le dispositif de l'invention en vue de dessus,
- la figure 3 montre le diagramme d'enrôlement du premier administrateur,
- la figure 4 représente le diagramme de l'ouverture d'une session administrateur,
- la figure 5 représente le diagramme de navigation dans le menu de configuration,
- la figure 6 représente le diagramme de fonctionnement du dispositif en présence d'un utilisateur.

### DESCRIPTION DETAILLEE DE L'INVENTION

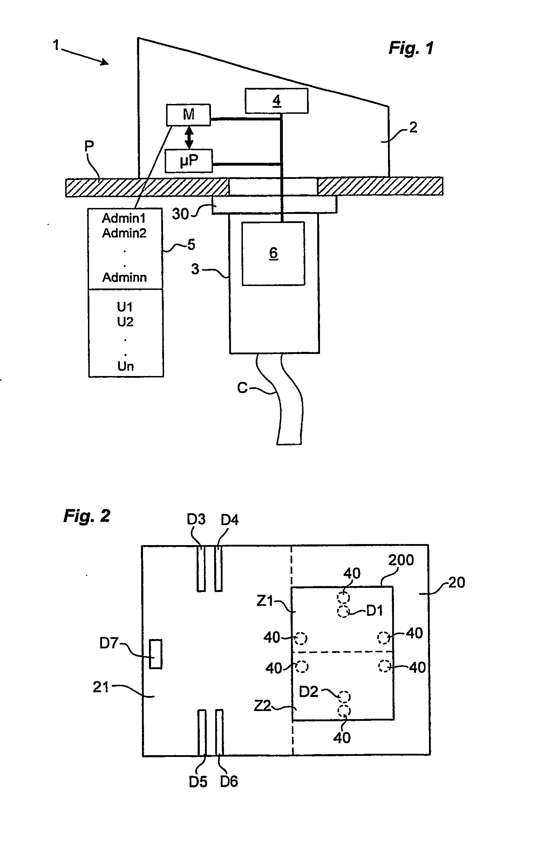

En référence à la figure 1, le dispositif de commande 1 de l'invention a la forme et le format d'un bouton de commande classique et peut cohabiter avec des boutons classiques sur un panneau de commande P. Il est donc destiné à être monté dans une ouverture circulaire ménagée à travers le panneau P. Le dispositif de commande de l'invention est monolithique, c'est-à-dire constitué d'un boîtier fermé unique composé d'un organe de commande 2 apparent sur la face avant du panneau P et d'un élément tubulaire 3 traversant l'ouverture et comportant à l'arrière une connectique sur laquelle peut venir se connecter un câble C. L'alimentation des circuits électroniques du dispositif est fournie par le câble C, à travers un bloc d'alimentation 6 contenu dans l'élément tubulaire 3, et les commandes générées par le dispositif sont également envoyées sur le câble C. Un écrou 30 vissé sur l'élément tubulaire 3 permet de serrer le dispositif 1 contre la face arrière du panneau P.

Le dispositif de commande 1 de l'invention est autonome en ce que sa configuration et son fonctionnement sont entièrement réalisés à partir de l'organe de commande 2, sans connexion à des moyens externes tels qu'un ordinateur. Le dispositif 1 de l'invention intègre dans son boîtier un capteur biométrique 4 d'empreintes digitales ainsi que tous les moyens nécessaires à l'acquisition, la mémorisation et la gestion des données mémorisées acquises grâce au capteur biométrique 4. Ces moyens par exemple inclus dans l'organe de commande 2 du dispositif 1 (comme sur la figure 1) ou éventuellement dans l'élément tubulaire 3 sont constitués d'une unité centrale comprenant un micro-processeur µP destiné à traiter les données générées grâce au capteur biométrique 4 et des moyens de mémorisation M comportant au moins une mémoire vive et une mémoire non volatile de type flash ou EEPROM. La mémoire non volatile est destinée à stocker de manière permanente une liste 5 des personnes autorisées, c'est-à-dire un ou plusieurs administrateurs (admin1-adminn) et un ou plusieurs utilisateurs (U1-Un), et un programme application comportant différents modules de fonctionnement et de configuration du dispositif. Le programme application comporte notamment un module de comparaison des données générées lors d'une acquisition avec des données mémorisées, un module pour ajouter/supprimer un administrateur, un module pour ajouter/supprimer un utilisateur, un module de réinitialisation complète du dispositif, un module de gestion des erreurs.

Grâce au capteur biométrique 4, le dispositif de l'invention est plus particulièrement destiné au contrôle d'accès à une machine, un processus ou un équipement industriel.

L'organe de commande 2 du dispositif 1 se divise en deux aires 20, 21, une aire de capture 20 qui supporte le capteur biométrique 4 et une aire de visualisation 21 pour indiquer les différents états du dispositif lors de sa configuration.

L'aire de capture 20 comporte une fenêtre de capture 200 sur laquelle un doigt peut être posé. Sous cette fenêtre de capture 200, le boîtier intègre le capteur biométrique 4 qui est par exemple de type optique. Ce type de capteur connu intègre un système d'éclairage composé par exemple de plusieurs diodes électroluminescentes 40 (au nombre de six sur la figure 2) situées sous la fenêtre de capture 200, un système optique (non représenté) de type prisme permettant de matérialiser l'empreinte digitale du doigt posé sur le capteur et un système de prise de vue (non représenté) de type capteur CCD ou CMOS. Les diodes électroluminescentes 40, ou diodes de capture, émettent une lumière ayant une couleur favorisant l'obtention d'une image de qualité suffisante pour effectuer une reconnaissance biométrique. Les diodes électroluminescentes 40 sont ici de couleur rouge. L'image prise est ensuite traitée par le microprocesseur.

Deux autres diodes électroluminescentes D1, D2, par exemple d'une couleur distincte des diodes 40 du système d'éclairage du capteur 4, sont disposées dans le capteur 4, sous la fenêtre de capture 200 pour identifier différentes zones de pose d'un doigt sur la fenêtre de capture 200. Les diodes D1, D2 sont ici de couleur bleu.

Selon l'invention, la fenêtre de capture 200 sert à la fois pour capturer les empreintes digitales des personnes ayant posé leur doigt mais également d'interface de saisie, sous la forme d'un pavé tactile, pour configurer le dispositif de commande 1. La fenêtre de capture 200 est ainsi composée de trois zones de pose de doigt pour assurer les fonctions de capture d'empreinte, de choix d'un mode de configuration et de validation.

La zone de capture d'empreinte (Z1+Z2) est constituée de la totalité de la fenêtre de capture 200 sur laquelle une personne peut poser son doigt pour être identifiée.

La zone Z1 de choix d'un mode de configuration est constituée de la moitié supérieure de la fenêtre de capture 200 tandis que la zone de validation Z2 est constituée de la moitié inférieure de la fenêtre de capture 200. Les deux diodes électroluminescentes D1, D2 sont chacune associées à une moitié de la fenêtre de capture 200 et servent à indiquer où la personne doit poser son doigt. Si les deux diodes D1, D2 clignotent de façon synchrone, la personne est alors invitée à poser son doigt sur la zone de capture, c'est-à-dire sur la totalité de la fenêtre de capture 200. Si seule la diode D1 située dans la moitié supérieure de la fenêtre 200 s'allume, la personne est invitée à poser son doigt dans la zone supérieure pour choisir un mode de configuration du dispositif. Si les deux diodes D1, D2 clignotent de façon asynchrone, la personne est invitée à poser son doigt soit dans la moitié supérieure pour choisir un autre mode de configuration soit dans la moitié inférieure pour valider son choix. Les diodes électroluminescentes D1, D2 servent ainsi au signalement des zones utilisables pour communiquer avec l'unité centrale du dispositif de commande. La détection est réalisée de manière classique par exemple par détection d'une ombre. Dès qu'un doigt est détecté dans une des zones, l'unité centrale commande la réalisation de l'action associée à ladite zone.

Lorsque l'action à engager est une capture d'empreinte digitale, il est prévu, comme cela sera détaillé ci-après, que les diodes D1, D2 clignotent à des fréquences différentes pour indiquer à l'utilisateur que trois opérations successives de capture d'empreinte sont réalisées et qu'il doit laisser son doigt sur la fenêtre de capture 200 tant que les opérations de capture ne sont pas terminées.

L'unité centrale est agencée pour synchroniser une phase de capture d'empreinte par le capteur biométrique avec une phase d'extinction des diodes électroluminescentes D1, D2 de signalement de zone. Dans le cas du clignotement des diodes D1, D2, l'unité centrale est agencée pour faire clignoter la diode électroluminescente correspondante et alterner des phases de capture d'empreinte et d'inactivation de la capture. Ainsi, le capteur biométrique 4 est activé entre deux allumages des diodes D1, D2 pour réaliser une capture d'image pendant cette période. Plusieurs images peuvent éventuellement être ainsi capturées pour une seule opération de capture. La réalisation d'une capture d'image entre deux allumage des diodes D1, D2 permet d'éviter que la lumière produite par les diodes D1, D2 ne vienne parasiter la capture d'une image de l'empreinte digitale du doigt appliqué contre la fenêtre de capture 200 du capteur biométrique 4.

Selon l'invention, les différents modes de configuration sont destinés à configurer le dispositif pour ajouter/supprimer un administrateur, ajouter/supprimer un utilisateur ou réinitialiser l'ensemble du dispositif, c'est-à-dire effacer de la mémoire non volatile la liste 5 des personnes autorisées. L'accès à ces différents modes de configuration du dispositif ne peut être réalisé que par un administrateur déjà enregistré dans la liste 5 mémorisée. Chaque dispositif comporte en outre sa propre procédure de réinitialisation pouvant être activée par un utilisateur lorsque l'administrateur n'est plus disponible. Cette procédure consiste en une séquence spécifique d'activation réalisée à partir de l'aire de capture 20.

L'aire de visualisation 21 située à côté de l'aire de capture 20 comporte une interface de visualisation simple destinée à indiquer le fonctionnement du dispositif. Cette interface de visualisation comporte ainsi deux diodes électroluminescentes D3, D4 sur la partie haute de l'aire 21 qui s'allument selon que le dispositif est dans le mode de configuration ajout/suppression d'un utilisateur (D3) ou dans le mode de configuration ajout/suppression d'un administrateur (D4).

Deux autres diodes électroluminescentes D5, D6 sont également présentes sur la partie basse de l'aire de visualisation 21. Une première diode électroluminescente D5 est destinée à s'allumer lorsqu'une erreur se produit lors de la configuration et une deuxième diode électroluminescente D6 est destinée à s'allumer lorsque le mode de configuration choisi est le mode de réinitialisation du dispositif.

L'aire de visualisation 21 comporte une dernière diode électroluminescente D7 destinée à indiquer l'état de la sortie du dispositif 1. Lorsque le dispositif est en attente d'un doigt et que la mémoire n'est pas vide, cette diode est allumée si la sortie est active et cette diode D7 est éteinte si la sortie est inactive. Pour commuter la sortie entre ses deux états, il est nécessaire qu'une personne autorisée pose son doigt sur la fenêtre de capture 200.

Les diodes D1-D7 sont susceptibles de prendre différents états selon le fonctionnement du dispositif. Elles peuvent être maintenues allumées ou éteintes. Elles peuvent être clignotantes avec un intervalle fixe, par exemple de 0,4 seconde, ou clignotantes à différentes cadences. Les diodes peuvent par exemple clignoter à trois cadences distinctes, cadence 1, cadence 2 et cadence 3. Pour les diodes D1 et D2, leur clignotement peut être synchrone ou asynchrone.

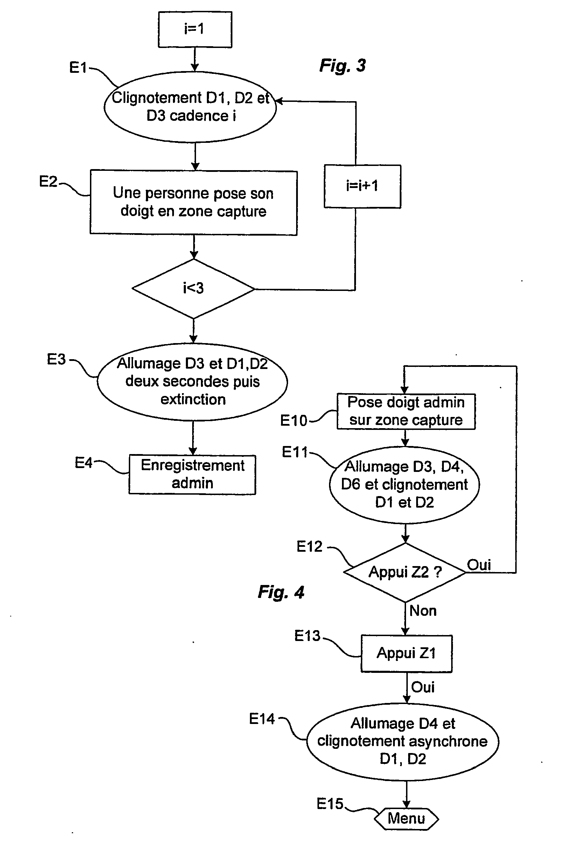

Différents modes de configuration sont expliqués ci-dessous en liaison avec les figures 3 à 6.

### Enrôlement du premier administrateur (figure 3)

Initialement, la liste 5 mémorisée ne contient aucune donnée. Les diodes D1 et D2 du capteur 4, ainsi que la diode D3 de l'aire de visualisation 21 correspondant au mode administrateur clignotent à la cadence 1 (E1). Tant qu'une personne maintient son doigt sur la zone capture (E2), c'est-à-dire sur la fenêtre de capture 200, les diodes D1, D2 et D3 se mettent à clignoter à la cadence 2 puis à la cadence 3. Ensuite les diodes D1, D2 et D3 restent allumés pendant deux secondes puis s'éteignent (E3). La personne ayant posé son doigt est ainsi enregistrée dans la liste 5 en tant qu'administrateur (E4). Après une durée déterminée, le dispositif 1 peut par exemple se mettre dans un état de veille.

La procédure de suppression d'un administrateur (non représentée) peut se dérouler de manière similaire dans une session administrateur en plaçant le doigt de l'administrateur à supprimer et en validant la suppression.

### Ouverture session administrateur (figure 4)

Un administrateur enregistré dans la liste 5 pose son doigt sur la zone de capture (E10). Les diodes D3, D4 et D6 correspondant aux différents modes de configuration ajout/suppression d'un administrateur, ajout/suppression d'un utilisateur et réinitialisation s'allument et les diodes D1, D2 clignotent de façon asynchrone (E11). Si l'administrateur appuie sur la zone validation Z2 (E12), alors qu'il n'a encore sélectionné aucun mode, le dispositif se met en mode veille et revient à l'état initial. En revanche si l'administrateur appuie sur la zone Z1 (E13), il entre dans le choix d'un mode de configuration. La diode D3 s'allume et les diodes D1 et D2 clignotent de manière asynchrone (E14). L'administrateur entre alors dans le menu de configuration (E15).

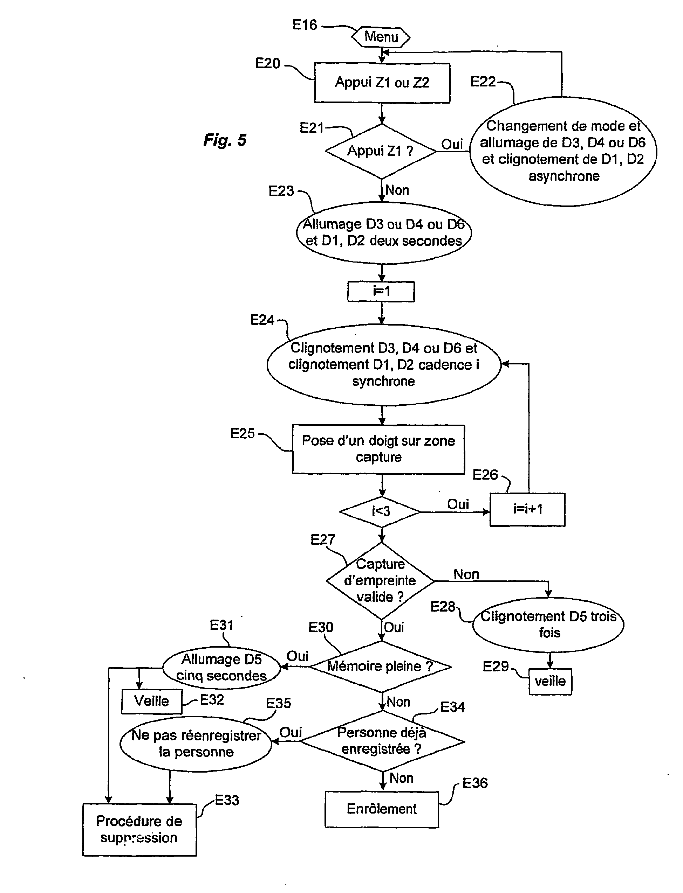

### Menu de configuration et enregistrement (figure 5)

En référence à la figure 5, l'administrateur peut directement valider le mode initial utilisateur en appuyant sur la zone Z2 ou changer de mode de configuration en appuyant sur la zone Z1 (E20). A chaque appui sur la zone Z1 mode de configuration (E21), l'administrateur change de mode de configuration et les diodes D3, D4 et D6 s'allument de manière correspondante (E22). Les diodes D1 et D2 clignotent de manière asynchrone. Si l'administrateur appuie alors sur la zone validation Z2 (E20), il valide le mode de configuration correspondant à la diode D3, D4 ou D6 allumée. Après validation d'un mode de configuration, la diode D3, D4 ou D6 correspondant au mode de configuration sélectionné ainsi que les diodes D1 et D2 restent allumés pendant deux secondes (E23) puis reprennent un clignotement à la cadence 1 (E24). Une personne pose son doigt sur la zone capture. Si le dispositif est en mode de configuration ajout/suppression administrateur ou ajout/suppression utilisateur, tant que la personne maintient son doigt sur la zone capture (E25), la diode D3 ou D4 ainsi que les diodes D1 et D2 clignotent à la cadence 2 puis à la cadence 3 (E26). Le programme vérifie ensuite si l'empreinte capturée est valide (E27). Si la personne n'est pas enregistrée dans la liste 5, la diode D5 signalant une erreur clignote trois fois (E28) puis le dispositif retourne par exemple en veille (E29). Ensuite, le programme application vérifie si la liste 5 n'est pas déjà pleine (E30). Si la liste 5 est pleine, la diode D5 signalant une erreur s'allume pendant cinq secondes (E31) et le dispositif 1 peut se mettre en état de veille (E32) au bout d'une durée déterminée ou alors lancer une procédure de suppression (E33-non représentée en détails). Si la liste 5 n'est pas pleine, on vérifie si la personne est déjà enregistrée (E34). Si la personne est déjà enregistrée, il n'est pas nécessaire de la réenregistrer (E35). Dans cette situation, la procédure de suppression (E33) de la personne peut être lancée. En revanche, si la personne n'est pas enregistrée dans la liste 5, la personne peut être enregistrée comme utilisateur ou administrateur (E36) de la même manière que lors de l'enrôlement du premier administrateur (figure 3). Si le mode de configuration sélectionné est le mode de réinitialisation, la personne posant son doigt à l'étape E25 doit être un administrateur sinon la diode D5 signalant une erreur clignote trois fois. Lors de la réinitialisation du dispositif, la diode D6 reste allumée pendant deux secondes puis s'éteint. Le dispositif revient ensuite à l'état initial avec une liste 5 vide.

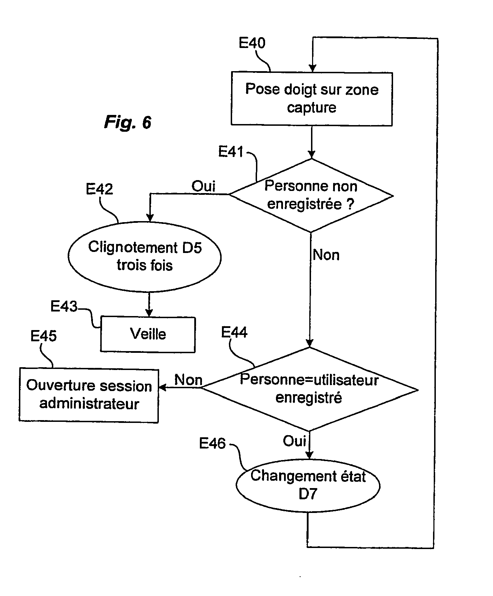

### Activation sortie (figure 6)

En fonctionnement normal, lorsqu'une personne pose son doigt sur la fenêtre de capture (E40), le programme vérifie si cette personne est déjà enregistrée dans la liste 5 mémorisée (E41). Si la personne n'est pas enregistrée, la diode D5 clignote trois fois pour renvoyer un signal d'erreur (E42). Après une durée déterminée, le dispositif revient en mode veille (E43). Si la personne est enregistrée dans la liste 5, le programme vérifie s'il s'agit d'un administrateur ou d'un utilisateur (E44). S'il s'agit d'un administrateur, le programme lance une session administrateur (E45 et figure 4). Si la personne est enregistrée en tant qu'utilisateur, la diode D7 change d'état (E46).

Une personne peut être enregistrée à la fois comme administrateur et comme utilisateur. Dans ce cas, cette personne a utilisé des doigts différents lors de son enregistrement comme administrateur et lors de son enregistrement comme utilisateur de telle manière que l'utilisation du dispositif de commande en tant qu'administrateur ou d'utilisateur est décidé en fonction du doigt choisi par la personne en question.

Bien entendu, il est possible de prévoir une interface de visualisation distincte de celle qui est décrite ci-dessus. Cependant, pour la compacité du dispositif, il convient de ne pas employer des moyens trop encombrants tels que des écrans de visualisation. De simples diodes électroluminescentes permettent la navigation et la validation dans les menus de configuration du dispositif 1. Bien entendu, l'emploi d'une quantité plus importante de diodes électroluminescentes et/ou un agencement différent des diodes peuvent être prévus.

Selon l'invention, il est également possible de prévoir des empreintes digitales "temporaires" permettant de donner un accès temporaire à une personne sans l'enregistrer dans le dispositif. Cette fonctionnalité peut présenter un intérêt lorsque l'accès doit être autorisé à une personne pour une courte durée (ex : action de maintenance). Le dispositif 1 mémorise ainsi des données relatives à des empreintes digitales écrites sur des supports amovibles, par exemple sous la forme de jetons, reconnaissables par le capteur 4.

En variante, l'unité de commande peut être agencée pour définir deux ou plusieurs zones dans l'aire de capture du capteur biométrique, ces zones comportant ou non des parties communes.

Il est possible de prévoir une extinction des diodes D1, D2 pour réaliser les phases de détection de doigt en vue de communiquer avec l'unité centrale. L'unité centrale est alors agencée pour faire clignoter la diode électroluminescente de signalement de zone et alterner des phases de détection de doigt et d'inactivation de la détection.

La synchronisation de la phase de capture avec l'extinction des diodes de signalement peut être effectuée même si la zone de capture n'est pas divisée en une pluralité de zones.

## Revendications

1. Dispositif de commande (1) comprenant un boîtier incluant :
- un organe de commande (2) comportant une aire de capture (20) intégrant un capteur biométrique (4) d'empreintes digitales apte à générer des données d'identification d'une personne,
- une unité centrale connectée au capteur (4) et renfermant des moyens de traitement et des moyens de mémorisation (M), lesdits moyens de mémorisation (M) étant aptes à stocker des données d'identification de personnes et un programme de gestion destiné à comparer des données d'identification mémorisées avec des données d'identification d'une nouvelle personne à acquérir grâce à l'organe de commande (2) et à enregistrer des données d'identification de nouvelles personnes acquises,
**caractérisé en ce que** :
- l'organe de commande (2) comporte une interface de saisie et une interface de visualisation pour gérer les données d'identification mémorisées et l'acquisition de nouvelles données d'identification,
- l'interface de visualisation comporte au moins une diode électroluminescente (D1, D2) de signalement, qui est disposée dans le capteur biométrique (4) et l'unité centrale est agencée pour synchroniser une phase de capture d'empreinte par le capteur biométrique avec une phase d'extinction de la diode électroluminescente de signalement,
- le capteur biométrique comporte un capteur qui est disposé avec ladite au moins une diode de signalement sous une fenêtre de capture (200).

2. Dispositif selon la revendication 1, **caractérisé en ce que** l'interface de saisie est intégrée au capteur biométrique (4).

3. Dispositif selon la revendication 1 ou 2, **caractérisé en ce que** l'interface de saisie comprend au moins deux zones définies du capteur biométrique.

4. Dispositif selon la revendication 3, **caractérisé en ce que** les deux zones sont dépourvues de partie commune.

5. Dispositif selon la revendication 1, **caractérisé en ce que** l'unité centrale est agencée pour faire clignoter la diode électroluminescente de signalement et alterner des phases de capture d'empreinte et d'inactivation de la capture.

6. Dispositif selon l'une des revendications 1 à 5, **caractérisé en ce que** l'interface de visualisation comporte des diodes électroluminescentes (D3, D4, D6) associées chacune à un mode de configuration du dispositif.

7. Dispositif selon l'une des revendications 1 à 6, **caractérisé en ce que** l'interface de visualisation comporte une diode électroluminescente (D5) associée à une erreur dans la configuration du dispositif (1).

8. Dispositif selon l'une des revendications 1 à 7, **caractérisé en ce que** l'interface de visualisation comporte une diode électroluminescente (D3) associée à un mode de configuration ajout/suppression d'un administrateur.

9. Dispositif selon l'une des revendications 1 à 8, **caractérisé en ce que** l'interface de visualisation comporte une diode électroluminescente (D4) associée à un mode de configuration ajout/suppression d'un utilisateur.

10. Dispositif selon l'une des revendications 1 à 9, **caractérisé en ce que** l'interface de visualisation comporte une diode électroluminescente (D6) associée à un mode de configuration de réinitialisation du dispositif.

11. Dispositif selon l'une des revendications 1 à 10, **caractérisé en ce que** l'interface de visualisation comporte une diode électroluminescente associée à l'état de sortie du dispositif.

12. Dispositif selon l'une des revendications 1 à 11, **caractérisé en ce que** l'organe de commande est visible sur une face avant d'un panneau (P) et **en ce qu'**il se prolonge par un élément tubulaire (3) traversant le panneau (P) à travers une ouverture circulaire.

## Claims

1. Control device (1) comprising a housing including:
- a control member (2) including a capture area (20) integrating a biometric fingerprint sensor (4) adapted to generate person identification data,
- a central unit connected to the sensor (4) and including processing means and storage means (M), said storage means (M) being adapted to store person identification data and a management program adapted to compare stored identification data with identification data of a new person to be acquired by the control member (2) and to store acquired identification data of new persons, **characterized in that**:
- the control member (2) includes a capture interface and a display interface to manage stored identification data and acquisition of new identification data,
- the display interface includes at least one signaling light-emitting diode (D1, D2) disposed in the biometric sensor (4) and the central unit is adapted to synchronize a phase of fingerprint capture by the biometric sensor with a phase of extinction of the signaling light-emitting diode,
- the biometric sensor includes a sensor which is disposed with said at least one signaling light-emitting diode under a capture window (200).

2. Device according to claim 1, **characterized in that** the capture interface is integrated into the biometric sensor (4).

3. Device according to claim 1 or 2, **characterized in that** the capture interface includes at least two defined areas of the biometric sensor.

4. Device according to claim 3, **characterized in that** the two areas have no common part.

5. Device according to claim 1, **characterized in that** the central unit is adapted to cause the signaling light-emitting diode to blink and to alternate fingerprint capture phases and capture deactivation phases.

6. Device according to any one of claims 1 to 5, **characterized in that** the display interface includes light-emitting diodes (D3, D4, D6) each associated with one configuration mode of the device.

7. Device according to any one of claims 1 to 6, **characterized in that** the display interface includes a light-emitting diode (D5) associated with an error in the configuration of the device (1).

8. Device according to any one of claims 1 to 7, **characterized in that** the display interface includes a light-emitting diode (D3) associated with an add/remove administrator configuration mode.

9. Device according to any one of claims 1 to 8, **characterized in that** the display interface includes a light-emitting diode (D4) associated with an add/remove user configuration mode.

10. Device according to any one of claims 1 to 9, **characterized in that** the display interface includes a light-emitting diode (D6) associated with a device reinitialization configuration mode.

11. Device according to any one of claims 1 to 10, **characterized in that** the display interface includes a light-emitting diode associated with the output state of the device.

12. Device according to any one of claims 1 to 11, **characterized in that** the control member is visible on a front face of a panel (P) and **in that** it is extended by a tubular element (3) passing through a circular opening in the panel (P).

## Patentansprüche

1. Steuereinrichtung (1) mit einem Gehäuse, umfassend:
- ein Steuerorgan (2), umfassend einen Erfassungsbereich (20), der einen biometrischen Sensor (4) für digitale Fingerabdrücke integriert, der geeignet ist, Identifikationsdaten einer Person zu erzeugen,
- eine mit dem Sensor (4) verbundene Zentraleinheit, die Mittel zur Verarbeitung und Mittel zur Speicherung (M) enthält, wobei die Mittel zur Speicherung (M) geeignet sind, die Identifikationsdaten von Personen und ein Verwaltungsprogramm zu speichern, das dazu bestimmt ist, die gespeicherten Identifikationsdaten durch das Steuerorgan (2) mit den Identifikationsdaten einer neuen zu erfassenden Person zu vergleichen und die Identifikationsdaten der neuen, erfassten Personen zu speichern, **dadurch gekennzeichnet, dass**:
- das Steuerorgan (2) ein Interface für die Erfassung und ein Interface für die Visualisierung zur Verwaltung von gespeicherten Identifikationsdaten und zur Erfassung von neuen Identifikationsdaten umfasst;
- das Interface für die Visualisierung mindestens eine Signal-Lumineszenzdiode (D1, D2) umfasst, die im biometrischen Sensor (4) angeordnet ist, und wobei die Zentraleinheit so ausgebildet ist, dass sie eine Phase zum Erfassen des Fingerabdrucks durch den biometrischen Sensor mit einer Phase des Erlöschens der Signal-Lumineszenzdiode synchronisiert;
- der biometrische Sensor einen Sensor umfasst, der mit der mindestens einen Signal-Diode unter einem Fenster zur Erfassung (200) angeordnet ist.

2. Vorrichtung nach Anspruch 1, **dadurch gekennzeichnet, dass** das Erfassungsinterface in den biometrischen Sensor (4) integriert ist.

3. Vorrichtung nach Anspruch 1 oder 2, **dadurch gekennzeichnet, dass** das Erfassungsinterface mindestens zwei definierte Zonen des biometrischen Sensors umfasst.

4. Vorrichtung nach Anspruch 3, **dadurch gekennzeichnet, dass** die beiden Zonen keinen gemeinsamen Abschnitt haben.

5. Vorrichtung nach Anspruch 1, **dadurch gekennzeichnet, dass** die Zentraleinheit so ausgebildet ist, dass die Signal-Lumineszenzdiode blinkt und die Phasen für die Erfassung des Fingerabdrucks und die Inaktivierung der Erfassung abwechseln.

6. Vorrichtung nach einem der Ansprüche 1 bis 5, **dadurch gekennzeichnet, dass** das Visualisierungsinterface Lumineszenzdioden (D3, D4, D6) umfasst, die jeweils mit einem Konfigurationsmodus der Vorrichtung verknüpft sind.

7. Vorrichtung nach einem der Ansprüche 1 bis 6, **dadurch gekennzeichnet, dass** das Visualisierungsinterface eine Lumineszenzdiode (D5) umfasst, die mit einem Fehler in der Konfiguration der Vorrichtung (1) verknüpft ist.

8. Vorrichtung nach einem der Ansprüche 1 bis 7, **dadurch gekennzeichnet, dass** das Visualisierungsinterface eine Lumineszenzdiode (D3) umfasst, die mit einem Konfigurationsmodus "Hinzufügen/Löschen" eines Administrators verknüpft ist.

9. Vorrichtung nach einem der Ansprüche 1 bis 8, **dadurch gekennzeichnet, dass** das Visualisierungsinterface eine Lumineszenzdiode (D4) umfasst, die mit einem Konfigurationsmodus "Hinzufügen/Löschen" eines Anwenders verknüpft ist.

10. Vorrichtung nach einem der Ansprüche 1 bis 9, **dadurch gekennzeichnet, dass** das Visualisierungsinterface eine Lumineszenzdiode (D6) umfasst, die mit einem Konfigurationsmodus für die Reinitialisierung der Vorrichtung verknüpft ist.

11. Vorrichtung nach einem der Ansprüche 1 bis 10, **dadurch gekennzeichnet, dass** das Visualisierungsinterface eine Lumineszenzdiode umfasst, die mit dem Ausgangszustand der Vorrichtung verknüpft ist.

12. Vorrichtung nach einem der Ansprüche 1 bis 11, **dadurch gekennzeichnet, dass** das Steuerorgan auf einer Fläche vor einer Platte (P) sichtbar ist und dass es durch ein rohrförmiges Element (3) verlängert ist, das die Platte (P) durch eine kreisförmige Öffnung durchsetzt.
